# EUROPEAN PATENT APPLICATION

(11) **EP 3 718 748 A1**
(43) Date of publication of application: **07.10.2020**
(21) Application number: 19166770.8
(22) Date of filing: 02.04.2019
(51) Int. Cl.: B29C 64/205, B33Y 30/00, B33Y 10/00, B29C 64/153

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Braunroth, Domenik, 96465 Neustadt bei Coburg (DE)
(74) Representative: Hafner & Kohl PartmbB

(57) **Abstract**

Apparatus (1) for additively manufacturing three-dimensional objects (2) by means of successive layerwise selective irradiation and consolidation of layers of build material (3) which can be consolidated by means of an energy beam, comprising:
- at least two build planes (BP1, BP2);
- a build material application device (8) being adapted to apply an amount of build material (3) in the at least two build planes (BP1, BP2), the build material application device (8) comprising:
-- at least one build material application element (8a, 8b), the at least one build material application element (8a, 8b) being moveably supported in a first motion path (MP1) in which the at least one build material application element (8a, 8b) is moveable or moved across a first build plane (BP1) of the at least two build planes (8a, 8b), and in a second motion path (MP1) in which the at least one build material application element (8a, 8b) is moveable or moved across a second build plane (BP2) of the at least two build planes (8a, 8b).

## Description

The invention relates to an apparatus for additively manufacturing three-dimensional objects by means of successive layerwise selective irradiation and consolidation of layers of build material.

Respective apparatuses for additively manufacturing three-dimensional objects by means of successive layerwise selective irradiation and consolidation of layers of build material are generally known from prior art.

A respective apparatus typically comprises a build plane in which the successive layerwise selective irradiation and consolidation of layers of build material and thus, the additive build-up of three-dimensional objects takes place during operation of the apparatus. Build material layers which are to selectively irradiated and thereby, consolidated are successively applied in the build plane during operation of the apparatus.

Thereby, the aspect of applying build material layers in a build plane of a respective apparatus is of high importance for the overall duration of the additive build process and thus, the overall productivity of the apparatus.

In order to increase productivity of a respective apparatus, build material application approaches with increased efficiency are desired. Build material application approaches with increased efficiency are of particular interest for implementing a series production of additively manufactured components.

Hence, there is a need for further improved apparatuses allowing for a more efficient and productive additive manufacturing three-dimensional objects.

It is the object of the invention to provide an apparatus for additively manufacturing three-dimensional objects by means of successive layerwise selective irradiation and consolidation of layers of build material by means of an energy beam allowing for a more efficient and productive additive manufacturing three-dimensional objects.

This object is achieved by an apparatus according to Claim 1. The claims depending on Claim 1 relate to possible embodiments of the apparatus according to Claim 1.

A first aspect of the invention is an apparatus (hereinafter "apparatus") for additively manufacturing three-dimensional objects, e.g. technical components, by means of successive layerwise selective irradiation and consolidation of build material layers. Typically, respective build material layers can be consolidated by means of at least one energy beam. A respective build material layer may be a layer of a build material powder. The build material powder may comprise at least one of a metal powder, a ceramic powder, or a polymer powder, for instance. A respective energy beam may be an electron beam or a laser beam, for instance. The apparatus may thus, be implemented as a selective electron beam melting apparatus or a selective laser melting apparatus, for instance. Yet, the apparatus may also be implemented as a binder jetting apparatus, particularly as a metal binder jetting apparatus.

The apparatus comprises at least two build planes, i.e. at least a first and a second build plane. A build plane can be defined as a plane in which a successive layerwise selective irradiation and consolidation of layers of build material and thus, an additive build-up of three-dimensional objects can take place during operation of the apparatus.

The at least two build planes are typically spatially separated from each other; thus, typically a clearance or gap space extends between the at least two build planes.

The at least two build planes may have the same or different spatial dimensions, i.e. they may have the same or different geometric size, shape, etc. According to an exemplary embodiment, the at least two build planes may each have a rectangular shape, particularly a square shape, of same or similar dimensions.

The at least two build planes may be disposed in arbitrary spatial arrangements relative to each other. The at least two build planes may e.g. be disposed in a lateral arrangement, particularly in a side-by-side arrangement, more particularly in a parallel arrangement, or in a line arrangement, for instance. In either case, even though the at least two build planes are typically spatially separated from each other, the at least two build planes may be disposed in the same (horizontal) plane. The (horizontal) plane may be defined by the bottom wall of a process chamber of the apparatus.

The at least two build planes may be disposed in a common process chamber of the apparatus. Yet, it is also conceivable that the at least two build planes are disposed in at least two separate process chambers of the apparatus; i.e. a first build plane is disposed in a first process chamber of the apparatus and a second build plane is disposed in a second process chamber of the apparatus. The at least two separate process chambers of the apparatus may be connectable or connected with each other so that a build material application element of a build material application device - which will be described below in more detail - can be moved from a first process chamber to a second process chamber and vice versa. In either case, the at least two build planes may be disposed in a (horizontal) plane defined by the bottom wall of a (respective) process chamber of the apparatus.

The apparatus comprises a number of functional devices which are operable during its operation. Each functional device may comprise a number of functional elements. A first exemplary functional device is a build material application device adapted to apply an amount, particularly a specific amount, of build material in the at least two build planes of the apparatus. Another exemplary functional device is an irradiation device adapted to successively selectively irradiate and consolidate respective layers of build material applied in a build plane with at least one energy beam, e.g. an electron beam or a laser beam, the irradiation device comprising at least one irradiation generating element, particularly an energy beam generating element, adapted to emit the at least one energy beam towards at least one of the at least two build planes.

As mentioned before, the build material application device is adapted to apply an amount, particularly a specific amount of build material for generating build material layers which are to be selectively consolidated, in each of the at least two build planes of the apparatus. Thus, the build material application device is typically allocated to the at least two build planes of the apparatus. By applying an amount of build material in a respective build plane of the apparatus, a build material layer is formed in the respective build plane, which build material layer is to be selectively consolidated during operation of the apparatus. Thus, the build material application device is adapted to apply an amount of build material in each of the build planes of the apparatus so as to form respective build material layers which are to be selectively consolidated during operation of the apparatus. This build material application process is repeated several times during the additive manufacture of three-dimensional objects by means of the apparatus.

The build material application device may comprise only one build material application element or at least two build material application elements.

In either case, a respective build material application element may have a longitudinal geometric shape. A respective build material application element may be built as or comprise a re-coating element, e.g. a re-coating blade. Hence, the build material application device may be built as a re-coating device, comprising at least one build material application element being built as a re-coating element, particularly a re-coating blade, or comprising a re-coating element, particularly a re-coating blade. Yet, other embodiments of the build material application device and a respective build material application element are conceivable; as such, the build material application element may be built as or comprise a build material containment having at least one, particularly gate-like, opening through which build material may exit the containment so as to apply an amount, particularly a specific amount, of build material in a respective build plane of the apparatus; the containment may comprise at least one closing element allocated to the at least one opening of the containment. The closing element may be moveably supported relative to the at least one opening between an open and a closed position so as to open or close the at least one opening.

In the exemplary embodiment in which the build material application device comprises only one build material application element, the build material application element may be moveably supported in a first motion path and in a second motion path. The build material application element is thus, assigned both to the first motion path and the second motion path.. When moving the build material application element in the first motion path, the build material application element is moved across the first build plane so that it is possible to apply an amount of build material in the first build plane and thus, possible to form a build material layer which is to be selectively irradiated and consolidated during operation of the apparatus in the first build plane. The first motion path may be deemed or denoted as a first build material application path in which build material is applicable or applied in the first build plane. When moving the build material application element in the second motion path, the build material application element is moved across the second build plane so that it is possible to apply an amount of build material in the second build plane and thus, possible to form a build material layer which is to be selectively irradiated and consolidated during operation of the apparatus in the second build plane. The second motion path may be deemed or denoted as a second build material application path in which build material is applicable or applied in the second build plane.

In this embodiment, the direction of motion of the build material application element in the first motion path may be the same or different, e.g. inverse or opposite, from the direction of motion of the build material application element in the second motion path and vice versa. Dependent from the arrangement of the first and second build planes, the first and second motion paths may extend in one (common) line, which particularly applies to a line arrangement of the build planes, or in two (separate) lines, particularly in two parallel lines, which particularly applies to a lateral arrangement of the build planes.

In the exemplary embodiment in which the build material application device comprises at least two build material application elements, at least one first build material application element may be moveably supported in a first motion path and at least one second build material application element may be moveably supported in a second motion path. The at least one first build material application element is thus, assigned to the first motion path and the at least one second build material application element is thus, assigned to the second motion path. When moving the at least one first build material application element in the first motion path, the at least one first build material application element is moved across the first build plane so that it is possible to apply an amount of build material in the first build plane and thus, possible to form a build material layer which is to be selectively irradiated and consolidated during operation of the apparatus in the first build plane. The first motion path may be deemed or denoted as a first build material application path in which build material is applicable or applied in the first build plane. When moving the at least one second build material application element in the second motion path, the at least one second build material application element is moved across the second build plane so that it is possible to apply an amount of build material in the second build plane and thus, possible to form a build material layer which is to be selectively irradiated and consolidated during operation of the apparatus in the second build plane. The second motion path may be deemed or denoted as a second build material application path in which build material is applicable or applied in the second build plane.

In this embodiment, the direction of motion of the at least one first build material application element in the first motion path may be the same or different, e.g. inverse or opposite, from the direction of motion of the at least one second build material application element in the second motion path and vice versa. Dependent from the arrangement of the first and second build planes, the first and second motion paths may extend in one (common) line, which particularly applies to a line arrangement of the build planes, or in two (separate) lines, particularly in two parallel lines, which particularly applies to a lateral arrangement of the build planes.

As mentioned above, the at least two build planes may be disposed in the same (horizontal) plane. Thus, the first motion path and the second motion path of the at least one build material application element may also extend in the same (horizontal) plane. This applies to any embodiment described herein.

In either case, a motion of a respective build material application element may be performed constantly, i.e. without interruption. A respective build material application element may thus, be moved constantly in the respective motion path(s). A hard- and/or software embodied control unit of the build material application device may be adapted to control motions of the respective build material application element(s) so that the respective build material application element(s) is/can e.g. be moved with constant motion. As will be apparent from below, a build material application element may be moved in a (closed) loop or (closed) loop-like manner.

By providing at least two separate build planes and at least one build material application element being moveably supported in a respective first and/or second motion path, a highly efficient application of build material in the build planes is feasible. Thus, the apparatus, particularly the build material application device, allows for an efficient application of build material in the build planes. An efficient application of build material in the build planes results in an efficient and productive additive build-up of three-dimensional objects.

A respective first motion path can be defined by a first translational axis of motion, particularly by a first linear axis of motion. The first translational axis of motion can extend in a horizontal plane. Thus, the first motion path can be or comprise a first translational axis of motion which extends in a horizontal plane. The first motion path may thus, be a translational motion path. Likewise, a respective second motion path can be defined by a second translational axis of motion, particularly by a second linear axis of motion. The second translational axis of motion can extend in a horizontal plane. Thus, the second motion path can be or comprise a second translational axis of motion which extends in a horizontal plane. The second motion path may thus, be a translational motion path.

The respective first and second motion paths are typically defined by a motion path-related start position and a motion path-related end position. As such, the first motion path may extend between a motion path-related start position of the first motion path and a motion path-related end position of the first motion path. Likewise, the second motion path may extend between a motion path-related start position of the second motion path and a motion path-related end position of the second motion path. It is possible that an end position of the first or second motion path may coincide with a start position of the second or first motion path or that an end position of the second or first motion path may coincide with a start position of the first or second motion path, respectively.

The start position of the first motion path may be (laterally) offset from a first side of the first build plane of the apparatus, whereby the first motion path may comprise the first build plane of the apparatus. In other words, the start position of the first motion path may be laterally adjacently located to a first (lateral) side of the first build plane. The start position of the first motion path may particularly, be in or (laterally) in front of a (first) build material supplying region from which an amount of build material, which is to be applied in the first build plane during motion of the respective build material application element in the first motion path, is supplyable or supplied. A respective build material supplying region may be provided by a (first) dose device, particularly by a dose module, which is adapted to dose an amount, particularly a specific amount, of build material which is to be applied in the first build plane during motion of the respective build material application element in the first motion path.

Likewise, the start position of the second motion path may be (laterally) offset from a first side of the second build plane of the apparatus, whereby the second motion path may comprise the second build plane of the apparatus. In other words, the start position of the second motion path may be laterally adjacently located to a first (lateral) side of the second build plane. The start position of the second motion path may particularly, be in or (laterally) in front of a (first or second) build material supplying region from which an amount of build material, which is to be applied in the second build plane during motion of the respective build material application element in the second motion path, is supplyable or supplied. A respective build material supplying region may be provided by a (first or second) dose device, particularly by a dose module, which is adapted to dose an amount, particularly a specific amount, of build material which is to be applied in the second build plane during motion of the respective build material application element in the second motion path.

The end position of the first motion path may be (laterally) offset from a second side of the first build plane, whereby the first motion path may comprise the first build plane of the apparatus. The second side of the first build plane may be opposite to the first side of the first build plane. In other words, the end position of the first motion path may be laterally adjacently located to a second (lateral) side of the first build plane. The end position of the first motion path may particularly, be in or (laterally) behind a (first) build material receiving region in which an amount of build material which was not applied in the first build plane during motion of a respective build material application element in the first motion path, is receivable or received. A respective build material receiving region may be provided by an overflow device, particularly by an overflow module, which is adapted to receive an amount of build material which was not applied in the first build plane during motion of the respective build material application element in the first motion path.

Likewise, the end position of the second motion path may be (laterally) offset from a second side of the second build plane, whereby the second motion path may comprise the second build plane of the apparatus. The second side of the second build plane may be opposite to the first side of the second build plane. In other words, the end position of the second motion path may be laterally adjacently located to a second (lateral) side of the second build plane. The end position of the second motion path may particularly, be in or (laterally) behind a (first or second) build material receiving region in which an amount of build material which was not applied in the second build plane during motion of a respective material application element in the second motion path, is receivable or received. A respective build material receiving region may be provided by an overflow device, particularly by an overflow module, which is adapted to receive an amount of build material which was not applied in the second build plane during motion of the respective build material application element in the second motion path.

As is apparent from above, a respective build material application element may be moved at least partly across a respective build material supplying region allocated to the first build plane, the first build plane, and at least partly across a respective build material receiving region allocated to the first build plane during motion in the first motion path. Particularly, the respective build material application element may be moved across a respective first build material supplying region, the first build plane, and a respective first build material receiving region during motion in the first motion path. Hence, a respective first motion path may comprise a motion across a respective first build material supplying region, the first build plane, and a respective first build material receiving region. Thus, the start and end position of a respective first motion path are typically arranged in the plane which comprises the first build plane and also a respective first build material supplying region and/or a first build material receiving region. Hence, the first motion path may be expressed by a line, particularly a straight line, extending across the first build plane, preferably across a respective first build material supplying region, the first build plane and a respective first build material receiving region.

As is also apparent from above, a respective build material application element may be moved at least partly across a respective build material supplying region allocated to the second build plane, the second build plane, and at least partly across a respective build material receiving region allocated to the second build plane during motion in the second motion path. Particularly, the respective build material application element may be moved across a respective second build material supplying region, the second build plane, and a respective second build material receiving region during motion in the second motion path. Hence, a respective second motion path may comprise a motion across a respective second build material supplying region, the second build plane, and a respective second build material receiving region. Thus, the start and end position of a respective second motion path are typically arranged in the plane which comprises the second build plane and also a respective second build material supplying region and/or a second build material receiving region. Hence, the second motion path may be expressed by a line, particularly a straight line, extending across the second build plane, preferably across a respective second build material supplying region, the second build plane and a respective second build material receiving region.

Thereby, the first motion path of the at least one build material application element may extend in a first direction of motion and the second motion path of the at least one build material application element may extend in a second direction of motion, whereby the first direction of motion is the same direction of motion as the second direction of motion or a different direction of motion than the first direction of motion.

In the exemplary embodiment in which the at least two build planes are disposed in a line arrangement, whereby the first motion path is not disposed with a lateral offset relative to the second motion path, the first motion path may extend between a start position and an end position and the second motion path may extend between a start position and an end position. Thereby, the start position of the first motion path may be laterally offset from a first side of the first build plane, particularly in a build material supplying region in which an amount of build material which is to be applied in the first build plane of the apparatus during motion of the at least one material application element in the first motion path is supplyable or supplied, and the end position of the first motion path may be laterally offset from a second side of the first build plane, particularly in a build material receiving region in which an amount of build material which was not applied in the first build plane of the apparatus during motion of the at least one build material application element in the first motion path is receivable or received.

Likewise, the start position of the second motion path may be laterally offset from a first side of the second build plane, particularly in a build material supplying region in which an amount of build material which is to be applied in the second build plane of the apparatus during motion of the at least one build material application element in the second motion path is supplyable or supplied, and the end position of the second motion path may be laterally offset from a second side of the second build plane, particularly in a build material receiving region in which an amount of build material which was not applied in the second build plane of the apparatus during motion of at least one build material application element in the second motion path is receivable or received.

Thereby, the second side of the first build plane may correspond to the first side of the second build plane and vice versa.

Thereby, the first motion path of the at least one build material application element may extend in a first direction of motion and the second motion path of the at least one build material application element may extend in a second direction of motion, whereby the first direction of motion is the same direction as the second direction of motion.

As is apparent from above, the first side of the first build plane may correspond to the first side of the second build plane and the second side of the first build plane may correspond to the second side of the second build plane or the first side of the first build plane may not correspond to the first side of the second build plane and the second side of the first build plane may not correspond to the second side of the second build plane.

According to another exemplary embodiment, the at least one build material application element can be moveably, particularly pivotably, supported in a first spatial orientation, particularly defined by the direction the free end of the build material application element is directed to or points at, respectively, in which it is oriented so as to be moveable in the first motion path in which the build material application element is moveable or moved across the first build plane of the at least two build planes, and in a second spatial orientation, particularly defined by the direction the free end of the build material application element is directed to or points at, respectively, in which it is oriented so as to be moveable in the second motion path in which the build material application element is moveable or moved across the second build plane of the at least two build planes. A respective motion of the build material application element - which may be additional and independent to the motion of the build material application element in the respective first and second motion paths - is typically useful for the above first exemplary configuration of a respective guiding element; the spatial orientation of the build material application element can be changed, e.g. in the end position of the first and second motion paths, respectively, so as to allow for applying build material in the respective build plane.

In either case, the apparatus may comprise a guiding device configured to guide a build material application element in the first and in the second motion path or - in a configuration with at least two build material application elements - configured to guide at least one first build material application element in the first motion path and at least one second build material application element in the second motion path.

In the case in which the guiding device is adapted to guide a build material application element in the first and in the second motion path, the guiding device may comprise at least one guiding element, particularly a guiding rail or a guiding slide, which is, particularly mechanically, couplable or coupled with the build material application element. A respective guiding element may be disposed at or in a (bottom) wall element of the process chamber of the apparatus.

The guiding device may be particularly, configured to guide at least one first build material application element in the first motion path and to guide at least one second build material application element in the second motion path. In this exemplary configuration, the guiding device may comprise at least one first guiding element, particularly a guiding rail or slide, being couplable or coupled with the at least one first build material application element, whereby the at least one first guiding element extends parallel to the first motion path, particularly in between the at least two build planes, and at least one second guiding element, particularly a guiding rail or slide, being couplable or coupled with at least one the second build material application element, whereby the at least one second guiding element extends parallel to the second motion path, particularly in between the at least two build planes.

As is apparent from above, a respective guiding element may at least partly extend in between the at least two build planes, the build planes particularly being disposed in a parallel arrangement. In other words, a respective guiding element may extend through a clearance or gap space between the at least two build planes. Thereby, the respective guiding element may particularly at least partly extend parallel to parallel (inner) sides of the at least two build planes being disposed in a parallel arrangement. In this configuration of a respective guiding element, the guiding element may comprise at least a first portion, particularly parallely, extending along a first side of the first build plane and a first side of the second build plane, the first side of the first build plane and the first side of the second build plane facing each other.

According to another exemplary configuration of the at least one guiding element, the respective guiding element may at least partly extend around the at least two build planes so as to encompass or surround the at least two build planes. In other words, a respective guiding element does not extend through a clearance or gap space between the at least two build planes in this configuration. Yet, the respective guiding element may particularly at least partly extend parallel to parallel (outer) sides of the at least two build planes being disposed in a parallel arrangement. In this configuration, the guiding element may comprise a first portion or segment, particularly parallely, extending along a first side of the first build plane, a second portion or segment disposed between the first portion or segment and a third portion or segment of the guiding element, the second portion or segment extending angled, particularly perpendicularly, relative to the first portion or segment, a third portion or segment disposed between the second portion or segment and a fourth portion or segment of the guiding element, the third portion or segment, particularly parallely, extending along a first outer side of the second build plane, and a fourth portion or segment disposed between the third portion or segment and the first portion or segment of the guiding element, the fourth portion or segment extending angled, particularly perpendicularly, relative to the third portion or segment.

The at least one build material application element can thus, also be moveably supported in a third motion path in which the build material application element is moved from a position in the first motion path, particularly an end position of the first motion path, to a position in the second motion path, particularly a start position of the second motion path. The third motion path may extend transverse to the first and/or second motion path(s). Further, the build material application element can thus, also be moveably supported in a fourth motion path in which the build material application element is moved from a position in the second motion path, particularly an end position of the second motion path, to a position in the first motion path, particularly a start position of the first motion path. The fourth motion path may extend transverse to the first and/or second motion path(s). The first and third portion can at least partly extend in parallel. Likewise, the second and fourth portion can at least partly extend in parallel.

Deflection elements, particularly deflection rollers, can be disposed in between the first and second portion, the second and third portion, the third and fourth portion, as well as the fourth and first portion of the at least one guiding element. Deflection elements can thus, be disposed in between respective motion paths. The deflection elements are adapted to transfer the at least one build material application element from one portion of the guiding element to a subsequent portion of the guiding element and thus, adapted to deflect the direction of motion of the build material application element from a first direction of motion into further direction of motion.

Other configurations of respective guiding element(s) forming part of the guiding device than the ones specified above are conceivable.

The apparatus may further comprise at least one drive device adapted to generate a drive force for moving a build material application element in the first and in the second motion path or a drive device adapted to generate a drive force for moving at least one first build material application element in the first motion path and to generate a drive force for moving at least one second build material application element in the second motion path. The drive device may be built as or comprise at least one drive unit, e.g. a linear drive unit, in particular a linear motor, adapted to generate a respective drive force which acts on the build material application element so as to move a respective build material application element in the respective motion path(s). A respective drive element may be disposed at or in a (bottom) wall element of the process chamber of the apparatus.

A respective drive device may thus, be adapted to generate a drive force for moving a build material application element in the first and in the second motion path, whereby the drive device comprises at least one drive element, particularly a drive belt, being couplable or coupled with the build material application element, whereby the at least one drive element extends in between the at least two build planes.

Likewise, a respective drive device may be adapted to generate a drive force for moving at least one first build material application element in the first motion path and to generate a drive force for moving at least one second build material application element in the second motion path, whereby the drive device comprises at least one first drive element, particularly a drive belt, being couplable or coupled with the at least one first build material application element, whereby the at least one first drive element extends parallel to the first motion path, particularly in between the at least two build planes, and at least one second drive element, particularly a drive belt, being couplable or coupled with at least one the second build material application element, whereby the at least one second drive element extends parallel to the second motion path, particularly in between the at least two build planes.

At least one motion and/or position determination device, e.g. a motion and/or position encoder, can be associated with a build material application element so as to qualitatively and/or quantitatively determine a (current) motion and/or position of the respective build material application element.

As is apparent from above, a respective drive element may at least partly extend in between the at least two build planes, the build planes particularly being disposed in a parallel arrangement. In other words, a respective drive element may extend through a clearance or gap space between the at least two build planes. Thereby, the respective drive element may particularly at least partly extend parallel to parallel (inner) sides of the at least two build planes being disposed in a parallel arrangement. In this configuration of a respective drive element, the drive element may comprise at least a first portion, particularly parallely, extending along a first side of the first build plane and a first side of the second build plane, the first side of the first build plane and the first side of the second build plane facing each other.

According to another exemplary configuration of the at least one drive element the at least one drive element may at least partly extend around the at least two build planes so as to encompass and/or surround the at least two build planes. In other words, a respective drive element does not extend through a clearance or gap space between the at least two build planes in this configuration. Yet, the respective drive element may particularly at least partly extend parallel to parallel (outer) sides of the at least two build planes being disposed in a parallel arrangement. In this configuration, the at least one drive element may comprise a first portion or segment, particularly parallely, extending along a first side of the first build plane, a second portion or segment disposed between the first portion or segment and a third portion or segment of the drive element, the second portion or segment extending angled, particularly perpendicularly, relative to the first portion or segment, a third portion or segment disposed between the second portion or segment and a fourth portion or segment of the drive element, the third portion or segment, particularly parallely, extending along a first outer side of the second build plane, and a fourth portion or segment disposed between the third portion or segment and the first portion or segment of the drive element, the fourth portion or segment extending angled, particularly perpendicularly, relative to the third portion or segment.

For a lateral arrangement of the at least two build planes, the at least one drive element may comprise four portions, whereby a first portion, particularly parallely, extending along a first outer side of the first build plane or the second build plane, a second portion disposed between the first portion and a third portion, the second portion extending angled, particularly perpendicularly, relative to the first portion, a third portion disposed between the second portion and a fourth portion, the third portion, particularly parallely, extending along a first outer side of the second build plane, and a fourth portion disposed between the third portion and the first portion of the drive element, the fourth portion extending angled, particularly perpendicularly, relative to the third portion.

For a line arrangement of the at least two build planes, the at least one drive element drive element may comprise four portions, whereby a first portion, particularly parallely, extends along a first outer side of the first build plane and a first outer side of the second build plane, a second portion disposed between the first portion and a third portion, the second portion extending angled, particularly perpendicularly, relative to the first portion, a third portion disposed between the second portion and a fourth portion, the third portion, particularly parallely, extending along a second outer side of the first build plane and a second outer side of the second build plane, and a fourth portion disposed between the third portion and the first portion of the drive element, the fourth portion extending angled, particularly perpendicularly, relative to the third portion.
As mentioned above, the build material application device may comprise a hard- and/or software embodied control unit which is adapted to control motions of the at least one build material application element at least in the first and/or second motion path. The control unit may communicate with a respective drive unit adapted to generate a respective drive force which acts on the build material application element so as to move the build material application element in the respective motion paths.

It was mentioned above that the build material application device may also comprise at least two build material application elements. In this case, each build material application element is moveably supported in a respective first motion path in which the respective build material application element is moved across a first build plane and/or in a respective second motion path in which the respective build material application element is moved across the second build plane. Motions of the at least two build material application elements may be performed constantly, i.e. without interruption. The at least two build material application elements may thus, be moved constantly in the respective motion paths. Likewise, motions of respective build material application elements may be performed simultaneously, i.e. when a first build material application element is in motion, a second build material application element may be in motion, too. The build material application elements may thus, be moved simultaneously in the respective motion paths. A control unit of the build material application device may be adapted to control motions of the build material application elements so that the build material application elements are/can be moved constantly and/or simultaneously.

The build material application elements may be moved independently or dependently of each other in the respective motion paths. Hence, the build material application elements may be moved with the same or different motion parameters, e.g. (positive or negative) acceleration, speed, etc.

The invention further relates to a build material application device for an apparatus for additively manufacturing three-dimensional objects by means of successive layerwise selective irradiation and consolidation of layers of build material, particularly an apparatus as described above. The build material application device is adapted to apply an amount of build material in at least two build planes of a respective apparatus, the build material application device comprising at least one build material application element, the build material application element being moveably supported in a first motion path in which the build material application element is moveable or moved across a first build plane of the at least two build planes, and in a second motion path in which the build material application element is moveable or moved across a second build plane of the at least two build planes. All annotations concerning the apparatus also apply to the build material application device.

The invention further relates to a method for applying an amount of build material in at least two build planes of an apparatus for additively manufacturing three-dimensional objects by means of successive layerwise selective irradiation and consolidation of layers of build material, particularly an apparatus as described herein. The method comprises the steps of:
- moving at least one build material application element in a first motion path in which the build material application element is moved across a first build plane, and
- moving the at least one build material application element in a second motion path in which the build material application element is moved across a second build plane, or
- moving at least one first build material application element in a first motion path in which the build material application element is moved across a first build plane, and moving at least one second build material application element in a second motion path in which the build material application element is moved across a second build plane.

The method may be implemented by means of an apparatus or build material application device, respectively as described herein; hence, all annotations concerning the apparatus and the build material application device also apply to the method.

Exemplary embodiments of the invention are described with reference to the Fig., whereby:
- Fig. 1: shows a principle drawing of an apparatus for additively manufacturing three-dimensional objects according to an exemplary embodiment; and
- Fig. 2 - 17: each show an enlarged view of a build material application device of the apparatus according to an exemplary embodiment

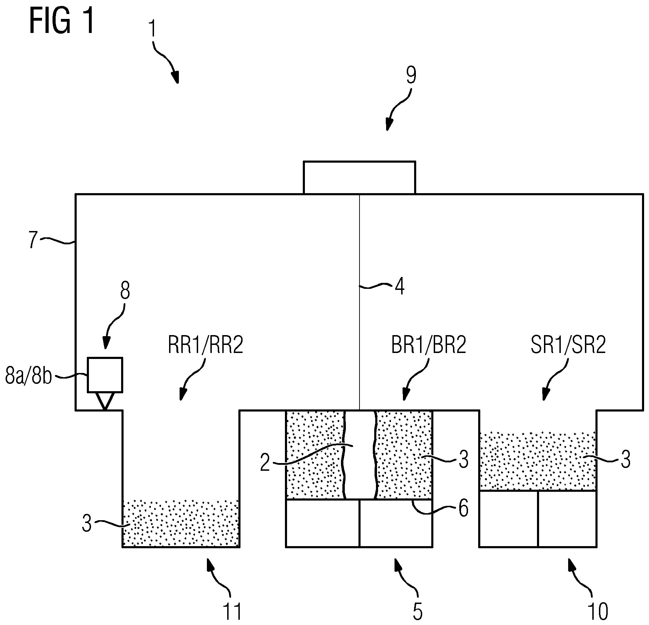

Fig. 1 shows a principle drawing of an apparatus 1 for additively manufacturing three-dimensional objects 2, e.g. technical components, by means of successive layerwise selective irradiation and accompanying consolidation of layers of a build material 3, e.g. a metal powder, which can be consolidated by means of at least one energy beam 4, e.g. an electron beam or a laser beam, according to an exemplary embodiment. The apparatus 1 can be a selective electron beam melting apparatus or a selective laser melting apparatus, for instance.

The apparatus 1 comprises a number of functional devices which are operable during its operation. Each functional device may comprise a number of functional units. Operation of the functional devices and the apparatus 1, respectively is controlled by a central control device (not depicted).

A first exemplary functional device is build device 5, particularly a build module, comprising at least one build plate 6. The build device 5 is provided in a build region BR1, BR2 of a process chamber 7 of the apparatus 1. Each build region BR1, BR2 is associated with a build plane BP1, BP2. Hence, each build plane BP1, BP2 defines a build region BR1, BR2. The build device 5 may be detachably coupled to the process chamber 7, i.e. particularly to a bottom wall of the process chamber 7.

T build plate 6 may define the spatial extension of at least one build plane BP1, BP2 in which build material layers are successively applied and successively selectively irradiated and consolidated during operation of the apparatus 1. As will be apparent from below, the apparatus 1 comprises two or more build planes BP1, BP2. The build plate 6 is typically vertically moveably supported.

A further exemplary functional device is a build material application device 8, e.g. a re-coating device, adapted to successively apply layers of build material 3 which are to be successively selectively irradiated and consolidated during operation of the apparatus 1 in the build planes BP1, BP2.

Anotherfunctional device is an irradiation device 9 adapted to successively selectively irradiate and consolidate respective layers of build material 3 applied in the build planes BP1, BP2 with the at least one energy beam 4.

A further functional device is an optional dose device 10, particularly a dose module, which is adapted to dose a specific amount of build material 3 which is to be applied in at least one build plane BP1, BP2 of the apparatus 1. The dose device 10 is provided in a powder supplying region SR1, SR2 of the process chamber 7 of the apparatus 1. The dose device 10 may be detachably coupled to the process chamber 7, i.e. particularly to a bottom wall of the process chamber 7.

Another functional device is an optional overflow device 11, particularly an overflow module, which is adapted to receive a specific amount of build material 3 which was not applied in the build planes BP1, BP2 of the apparatus 1. The overflow device 11 is provided in at least one build material receiving region RR1, RR2 of the process chamber 10 of the apparatus 1. The overflow device 11 may be detachably coupled to the process chamber 7, i.e. particularly to a bottom wall of the process chamber 7.

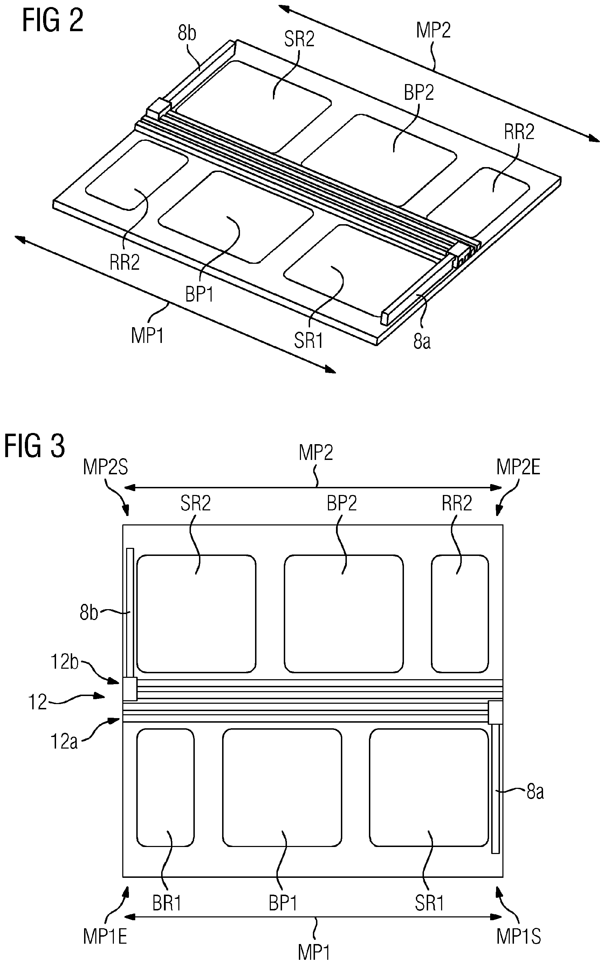

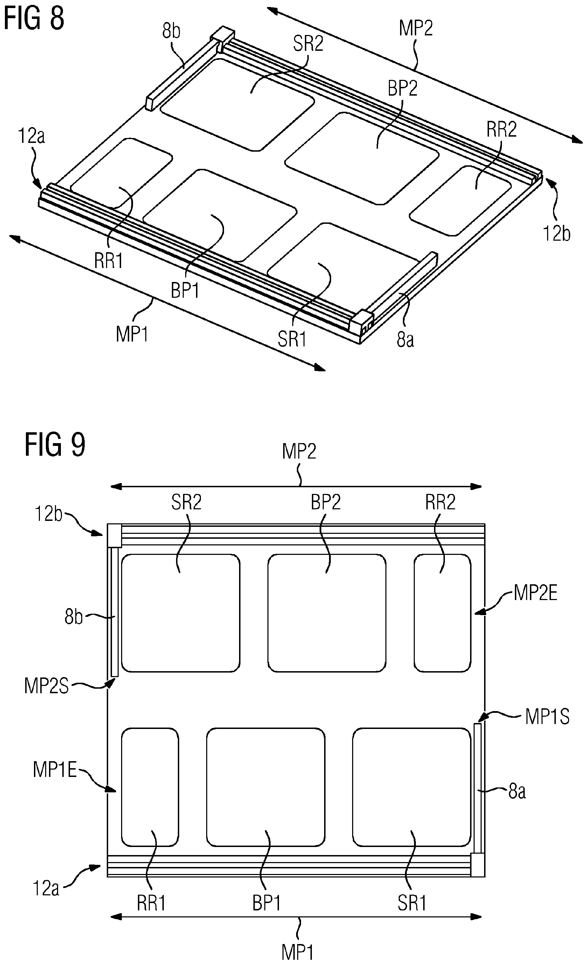

As mentioned above, the apparatus 1 comprises two (or more) build planes BP1, BP2, i.e. a first build plane BP1 and a second build plane BP2 (see Fig. 2 - 17). A respective build plane BP1, BP2 can be defined as a plane in which a successive layerwise selective irradiation and consolidation of layers of build material 3 and thus, an additive build-up of three-dimensional objects 2 can take place during operation of the apparatus 1.

As is apparent from the exemplary embodiments Fig. 2 - 17, the two build planes BP1, BP2 may be spatially separated from each other; thus a clearance or gap space extends between the two build planes BP1, BP2.

As is apparent from the exemplary embodiments of Fig. 2 - 17, the two build planes BP1, BP2 may have the same spatial dimensions, i.e. they may have the same or different geometric size, shape, etc. According to the exemplary embodiments of Fig. 2 - 17, the two build planes BP1, BP2 each have a rectangular shape, particularly a square shape.

As is apparent from the exemplary embodiments of Fig. 2 - 17, the two build planes BP1, BP2 may be disposed in arbitrary spatial arrangements relative to each other. The same applies to the respective build material supply regions SR1, SR2 and build material receiving regions RR1, RR2.

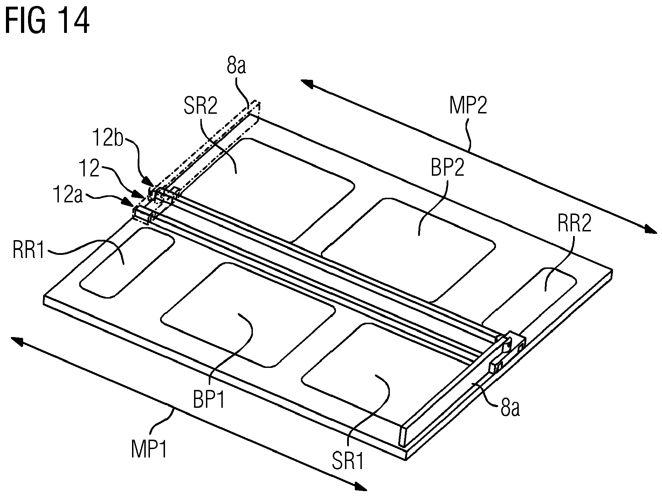

As is apparent from the exemplary embodiments of Fig. 2 - 13, whereby Fig. 2, 4, 6, 8, 10, 12 each show an isometric view and Fig. 3, 5, 7, 9, 11, 13 each show a top-view, the two build planes BP1 may be disposed in a lateral arrangement, particularly in a side-by-side arrangement, more particularly in a parallel arrangement. The same applies to the exemplary embodiment of Fig. 14.

Specifically in the embodiment of Fig. 14, the build material application element 8a may be pivoted in a horizontal plane so as to be transferred for moving along the first motion path MP1 and the second motion path MP2, respectively.

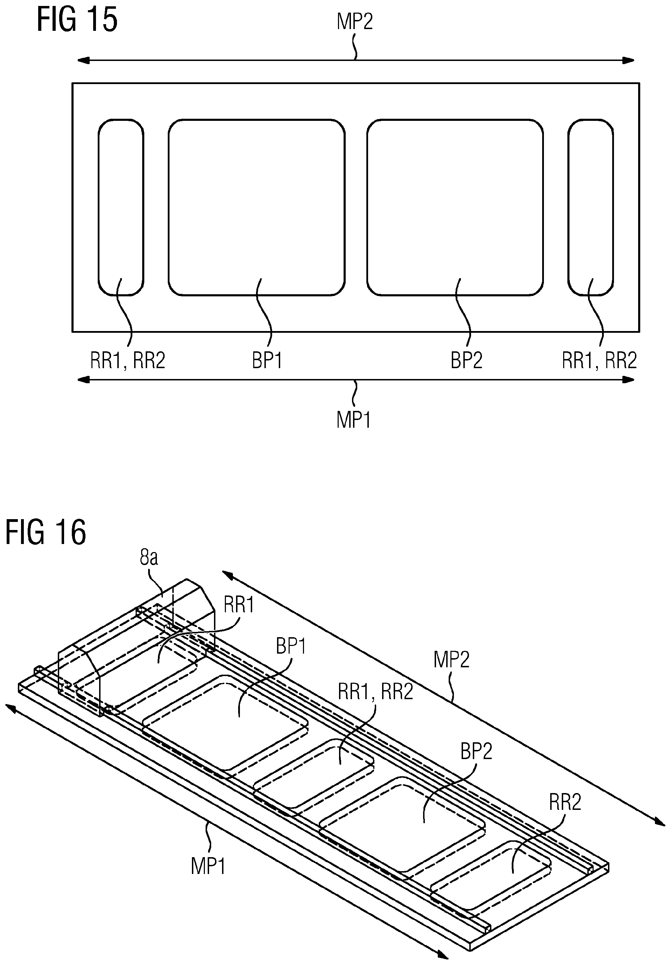

As is apparent from the exemplary embodiments of Fig. 15 and Fig. 16, the two build planes BP1, BP2 may be disposed in a line arrangement.

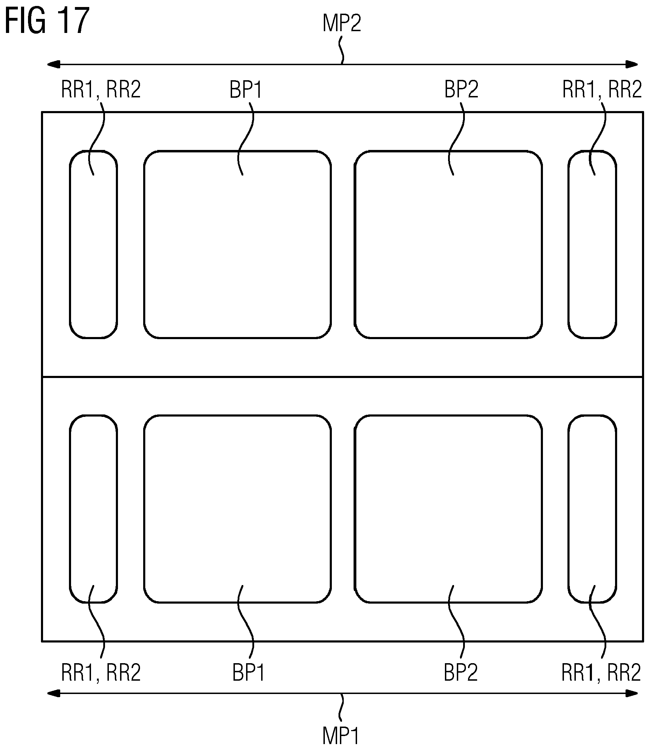

Fig. 17 depicts an exemplary embodiment with four build planes BP1 - BP4 which is a mixture of a respective a lateral arrangement and a respective line arrangement.

In either exemplary embodiment, the build planes BP1 - BP4 are disposed in the same (horizontal) plane which may be defined by the bottom wall of a process chamber 7 of the apparatus 1.

The build planes BP1 - BP4 may be disposed in a common process chamber 7 of the apparatus 1. Yet, it is also conceivable that the build planes BP1 - BP4 are disposed in at least two separate process chambers 7 of the apparatus 1; i.e. a first build plane BP1 is disposed in a first process chamber 7 of the apparatus 1 and a second build plane BP2 is disposed in a second process chamber 7 of the apparatus 1. Respective separate process chambers 7 of the apparatus 1 may be connectable or connected with each other so that a build material application element 8a, 8b of the build material application device 8 - which will be described below in more detail - can be moved from a first process chamber 7 to a second process chamber 7 and vice versa.

As mentioned before, the build material application device 8 is adapted to apply an amount, particularly a specific amount of build material 3 for generating at least one build material layer which is to be selectively consolidated, in each of the build planes BP1 - BP4 of the apparatus 1. Thus, the build material application device 8 is allocated to the build planes BP1 - BP4 of the apparatus 1. By applying an amount of build material 3 in a respective build plane BP1 - BP4 of the apparatus 1, a build material layer is formed in the respective build plane BP1 - BP4, which build material layer is to be selectively consolidated during operation of the apparatus 1. Thus, the build material application device 8 is adapted to apply an amount of build material 3 in each of the build planes BP1 - BP4 of the apparatus 1 so as to form respective build material layers which are to be selectively consolidated during operation of the apparatus 1. This build material application process is repeated several times during the additive manufacture of three-dimensional objects by means of the apparatus 1.

As is apparent from the exemplary embodiments of Fig. 2 - 17, the build material application device 8 may comprise only one build material application element 8a or at least two build material application elements 8a, 8b.

As is apparent from the exemplary embodiments of Fig. 2 - 9 and Fig. 14, a respective build material application element 8a, 8b may have a longitudinal geometric shape. A respective build material application element 8a, 8b may be built as or comprise a re-coating element, e.g. a re-coating blade. Hence, the build material application device 8 may be built as a re-coating device, comprising at least one build material application element 8a, 8b being built as a re-coating element, particularly a re-coating blade, or comprising a re-coating element, particularly a re-coating blade.

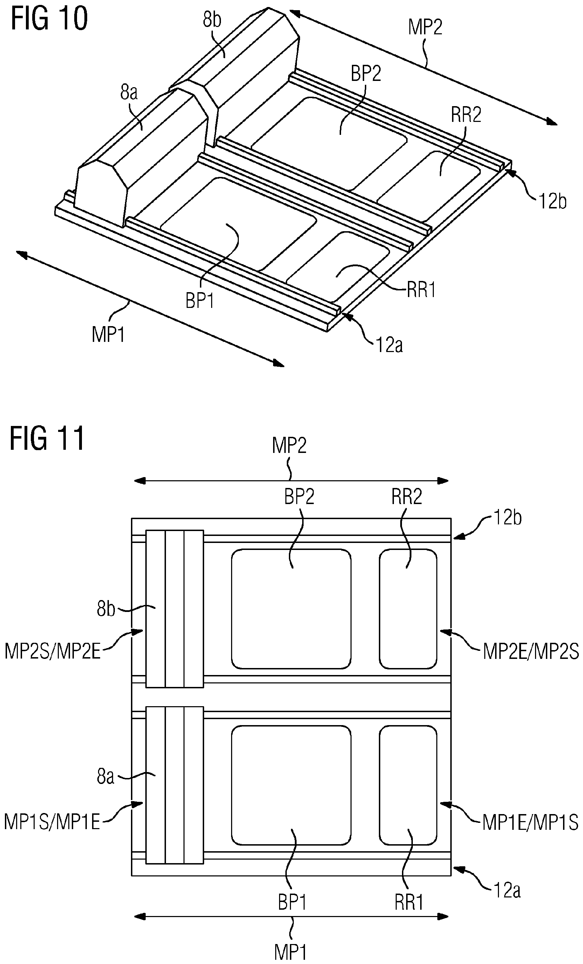

Yet, as is apparent from the exemplary embodiments of Fig. 10- 13 and Fig. 16, a respective build material application element 8a, 8b may be built as or comprise a build material containment having at least one, particularly gate-like, opening through which build material 3 may exit the containment so as to apply an amount, particularly a specific amount, of build material 3 in a respective build plane BP1 - BP4 of the apparatus 1; the containment may comprise at least one closing element allocated to the at least one opening of the containment. The closing element may be moveably supported relative to the at least one opening between an open and a closed position so as to open or close the at least one opening.

As is apparent from the exemplary embodiments of Fig. 2 - 13, which are embodiments in which the build material application device 8 comprises two build material application elements 8a, 8b, a first build material application element 8a may be moveably supported in a first motion path MP1 and a second build material application element 8b may be moveably supported in a second motion path MP2. The first build material application element 8a is thus, assigned to the first motion path MP1 and the second build material application element 8b is thus, assigned to the second motion path MP2. When moving the first build material application element 8a in the first motion path MP1, the first build material application element 8a is moved across the first build plane BP1 so that it is possible to apply an amount of build material 3 in the first build plane BP1 and thus, possible to form a build material layer which is to be selectively irradiated and consolidated during operation of the apparatus 1 in the first build plane BP1. The first motion path MP1 may be deemed or denoted as a first build material application path in which build material 3 is applicable or applied in the first build plane BP1. When moving the second build material application element 8b in the second motion path MP2, the second build material application element 8b is moved across the second build plane BP2 so that it is possible to apply an amount of build material 3 in the second build plane BP2 and thus, possible to form a build material layer which is to be selectively irradiated and consolidated during operation of the apparatus 1 in the second build plane BP2. The second motion path MP2 may be deemed or denoted as a second build material application path in which build material 3 is applicable or applied in the second build plane BP2.

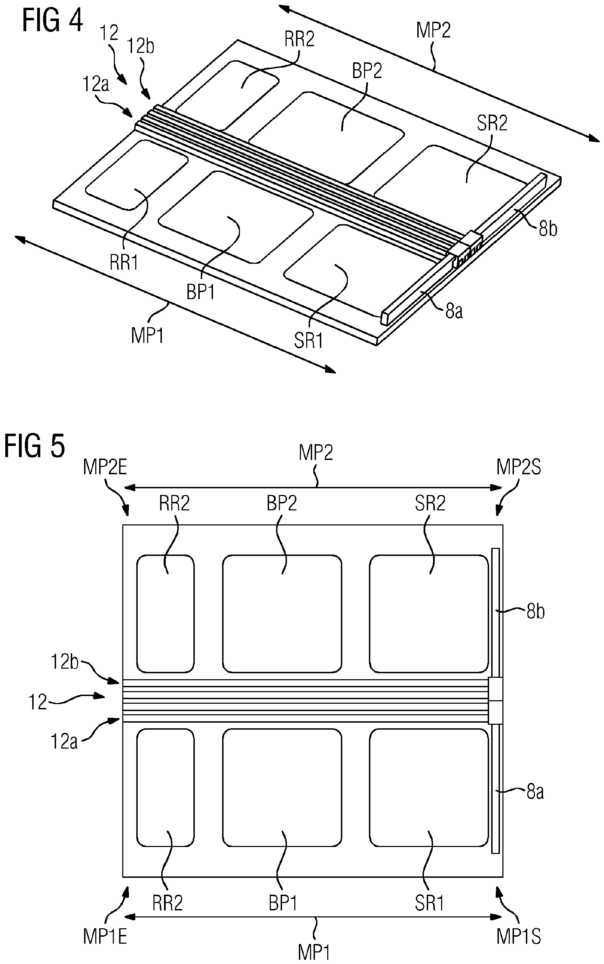

In these embodiments, the direction of motion of the first build material application element 8a in the first motion path may be the same (see e.g. Fig. 4 - 7) or different (see e.g. Fig. 2, 3, Fig. 8, 9, e.g. inverse or opposite, from the direction of motion of the second build material application element 8b in the second motion path MP2 and vice versa.

In these embodiments, the first and second motion paths MP1, MP2 may extend in two (separate) lines, particularly in two parallel lines.

As is apparent from the exemplary embodiments of Fig. 15 and Fig. 16, which are embodiments in which the build material application device 8 comprises only one build material application element 8a, the build material application element 8a may be moveably supported in a first motion path MP1 and in a second motion path MP2. The build material application element 8a is thus, assigned both to the first motion path MP1 and the second motion path MP2. When moving the build material application element 8a in the first motion path MP1, the build material application element 8a is moved across the first build plane BP1 so that it is possible to apply an amount of build material 3 in the first build plane BP1 and thus, possible to form a build material layer which is to be selectively irradiated and consolidated during operation of the apparatus 1 in the first build plane BP1. The first motion path MP1 may be deemed or denoted as a first build material application path in which build material is applicable or applied in the first build plane BP1. When moving the build material application element 8a in the second motion path, the build material application element 8a is moved across the second build plane BP2 so that it is possible to apply an amount of build material 3 in the second build plane BP2 and thus, possible to form a build material layer which is to be selectively irradiated and consolidated during operation of the apparatus 1 in the second build plane BP2. The second motion path MP2 may be deemed or denoted as a second build material application path in which build material 3 is applicable or applied in the second build plane MP2.

In these embodiments, the direction of motion of the build material application element 8a in the first motion path MP1 is different, e.g. inverse or opposite, from the direction of motion of the build material application element 8a in the second motion path MP2 and vice versa.

In these embodiments, the first and second motion paths MP1, MP2 may extend in one (common) line (see Fig. 15, 16) or in two (separate) lines (see Fig. 14), particularly in two parallel lines.

In either case, a motion of a respective build material application element 8a, 8b may be performed constantly, i.e. without interruption. A respective build material application element 8a, 8b may thus, be moved constantly in the respective motion path(s). A hard- and/or software embodied control unit, e.g. a computer or a computer programme, of the build material application device 8 may be adapted to control motions of the respective build material application element(s) 8a, 8b so that the respective build material application element(s) 8a, 8b is/can e.g. be moved with constant motion.

As is apparent from Fig. 2 - 17, a respective first motion path MP1 can be defined by a first translational axis of motion, particularly by a first linear axis of motion. The first translational axis of motion can extend in a horizontal plane. Thus, the first motion path MP1 can be or comprise a first translational axis of motion which extends in a horizontal plane. The first motion path MP1 may thus, be a translational motion path. Likewise, a respective second motion path MP2 can be defined by a second translational axis of motion, particularly by a second linear axis of motion. The second translational axis of motion can extend in a horizontal plane. Thus, the second motion path MP2 can be or comprise a second translational axis of motion which extends in a horizontal plane. The second motion path MP2 may thus, be a translational motion path.

The respective first and second motion paths MP1, MP2 are typically defined by a motion path-related start position MP1S, MP2S and a motion path-related end position MP1E, MP2E. As such, the first motion path MP1 may extend between a motion path-related start position MP1S of the first motion path MP1 and a motion path-related end position MP1E of the first motion path MP1. Likewise, the second motion path MP2 may extend between a motion path-related start position MP2S of the second motion path MP2 and a motion path-related end position MP2E of the second motion path MP2. As is apparent from Fig. 2 - 17, it is possible that an end position MP1E, MP2E of the first or second motion path MP1, MP2 may coincide with a start position MP1S, MP2S of the second or first motion path MP1, MP2 or that an end position MP1E, MP2E of the second or first motion path MP1, MP2 may coincide with a start position MP1S, MP2S of the first or second motion path MP1, MP2, respectively.

As is apparent from e.g. Fig. 2 - 13, the start position MP1S of the first motion path MP1 may be (laterally) offset from a first side of the first build plane BP1 of the apparatus 1, whereby the first motion path MP1 may comprise the first build plane BP1 of the apparatus 1. In other words, the start position MP1S of the first motion path MP1 may be laterally adjacently located to a first (lateral) side of the first build plane BP1. The start position of the first motion path MP1 may particularly, be in or (laterally) in front of a (first) build material supplying region SR1 from which an amount of build material 3, which is to be applied in the first build plane BP1 during motion of the respective build material application element 8a, 8b in the first motion path MP1, is supplyable or supplied.

Likewise, the start position MP2S of the second motion path MP2 may be (laterally) offset from a first side of the second build plane BP2 of the apparatus 1, whereby the second motion path MP2 may comprise the second build plane BP2 of the apparatus 1. In other words, the start position MP2S of the second motion path MP2 may be laterally adjacently located to a first (lateral) side of the second build plane BP2. The start position MP2S of the second motion path MP2 may particularly, be in or (laterally) in front of a (first or second) build material supplying region SR2 from which an amount of build material 3, which is to be applied in the second build plane BP2 during motion of the respective build material application element 8a, 8b in the second motion path MP2, is supplyable or supplied.

As is apparent from e.g. Fig. 2 - 13, the end position MP1E of the first motion path MP1 may be (laterally) offset from a second side of the first build plane BP1, whereby the first motion path MP1 may comprise the first build plane BP1 of the apparatus 1. The second side of the first build plane BP1 may be opposite to the first side of the first build plane BP1. In other words, the end position MP1E of the first motion path MP1 may be laterally adjacently located to a second (lateral) side of the first build plane BP1. The end position MP1E of the first motion path MP1 may particularly, be in or (laterally) behind a (first) build material receiving region RR1 in which an amount of build material 3 which was not applied in the first build plane BP1 during motion of a respective build material application element 8a, 8b in the first motion path MP1, is receivable or received.

Likewise, the end position MP2E of the second motion path MP2 may be (laterally) offset from a second side of the second build plane BP2, whereby the second motion path MP2 may comprise the second build plane BP2 of the apparatus 1. The second side of the second build plane BP2 may be opposite to the first side of the second build plane BP2. In other words, the end position of the second motion path MP2 may be laterally adjacently located to a second (lateral) side of the second build plane BP2. The end position MP2E of the second motion path MP2 may particularly, be in or (laterally) behind a (first or second) build material receiving region RR2 in which an amount of build material 3 which was not applied in the second build plane BP2 during motion of a respective material application element 8a, 8b in the second motion path MP2, is receivable or received.

As is apparent from above, a respective build material application element 8a, 8b may be moved at least partly across a respective build material supplying region SR1 allocated to the first build plane BP1, the first build plane BP1, and at least partly across a respective build material receiving region RR1 allocated to the first build plane BP1 during motion in the first motion path MP1. Particularly, the respective build material application element 8a, 8b may be moved across a respective first build material supplying region SR1, the first build plane BP1, and a respective first build material receiving region RR1 during motion in the first motion path MP1. Hence, a respective first motion path MP1 may comprise a motion across a respective first build material supplying region SR1, the first build plane BP1, and a respective first build material receiving region RR1. Thus, the start and end position of a respective first motion path MP1 are typically arranged in the plane which comprises the first build plane BP1 and also a respective first build material supplying region SR1 and/or a first build material receiving region RR1. Hence, the first motion path MP1 may be expressed by a line, particularly a straight line, extending across the first build plane BP1, preferably across a respective first build material supplying region SR1, the first build plane BP1 and a respective first build material receiving region RR1.

As is also apparent from above, a respective build material application element 8a, 8b may be moved at least partly across a respective build material supplying region SR2 allocated to the second build plane BP2, the second build plane BP2, and at least partly across a respective build material receiving region RR2 allocated to the second build plane BP2 during motion in the second motion path MP2. Particularly, the respective build material application element 8a, 8b may be moved across a respective second build material supplying region SR2, the second build plane BP2, and a respective second build material receiving region RR2 during motion in the second motion path MP2. Hence, a respective second motion MP2 path may comprise a motion across a respective second build material supplying region SR2, the second build plane BP2, and a respective second build material receiving region RR2. Thus, the start and end position of a respective second motion path MP2 are typically arranged in the plane which comprises the second build plane BP2 and also a respective second build material supplying region SR2 and/or a second build material receiving region RR2. Hence, the second motion path MP2 may be expressed by a line, particularly a straight line, extending across the second build plane BP2, preferably across a respective second build material supplying region SR2, the second build plane BP2 and a respective second build material receiving region RR2.

In the exemplary embodiments in which the two build planes BP1, BP2 are disposed in a line arrangement (see e.g. Fig. 15, 16), the first motion path MP1 may extend between a start position MP1S and an end position MP1E and the second motion path MP2 may extend between a start position MP2S and an end position MP2E. Thereby, the start position MP1S of the first motion path MP1 may be laterally offset from a first side of the first build plane BP1, particularly in a build material supplying region SR1 in which an amount of build material 3 which is to be applied in the first build plane BP1 of the apparatus 1 during motion of the build material application element 8a, 8b in the first motion path MP1 is supplyable or supplied, and the end position MP1E of the first motion path MP1 may be laterally offset from a second side of the first build plane BP1, particularly in a build material receiving region RR1 in which an amount of build material 3 which was not applied in the first build plane BP1 of the apparatus 1 during motion of the at least one build material application element 8a, 8b in the first motion path MP1 is receivable or received.

Likewise, the start position MP2S of the second motion path MP2 may be laterally offset from a first side of the second build plane BP2, particularly in a build material supplying region SR2 in which an amount of build material 3 which is to be applied in the second build plane BP2 of the apparatus 1 during motion of the build material application element 8a, 8b in the second motion path MP2 is supplyable or supplied, and the end position MP2E of the second motion path MP2 may be laterally offset from a second side of the second build plane BP2, particularly in a build material receiving region RR2 in which an amount of build material 3 which was not applied in the second build plane BP2 of the apparatus 1 during motion of the build material application element 8a, 8b in the second motion path MP2 is receivable or received.

Thereby, the second side of the first build plane BP1 may correspond to the first side of the second build plane B2 and vice versa.

As is apparent from the exemplary embodiments in Fig. 2 - 17, the first side of the first build plane BP1 may correspond to the first side of the second build plane BP2 and the second side of the first build plane BP1 may correspond to the second side of the second build plane BP2 or the first side of the first build plane BP1 may not correspond to the first side of the second build plane BP2 and the second side of the first build plane BP1 may not correspond to the second side of the second build plane BP2.

According to the exemplary embodiment of Fig. 14, the build material application element 8a can be moveably, particularly pivotably, supported in a first spatial orientation (shown in Fig. 14), particularly defined by the direction the free end of the build material application element 8a is directed to or points at, respectively, in which it is oriented so as to be moveable in the first motion path MP1 in which the build material application element 8a is moveable or moved across the first build plane BP1, and in a second spatial orientation, particularly defined by the direction the free end of the build material application element 8a is directed to or points at, respectively, in which it is oriented so as to be moveable in the second motion path MP2 in which the build material application element 8a is moveable or moved across the second build plane BP2.

In either embodiment, the apparatus 1 may comprise a guiding device 12 configured to guide a build material application element 8a, 8b in the first and in the second motion path MP1, MP2 or - in a configuration with two build material application elements 8a, 8b - configured to guide a first build material application element 8a in the first motion path MP1 and a second build material application element 8b in the second motion path MP2.

In the case in which the guiding device 12 is adapted to guide a build material application element 8a in the first and in the second motion path MP1, MP2, the guiding device 12 may comprise at least one guiding element 12a, 12b, particularly a guiding rail or a guiding slide, which is, particularly mechanically, couplable or coupled with the build material application element 8a. A respective guiding element 12a, 12b may be disposed at or in a (bottom) wall element of the process chamber 7 of the apparatus 1.

As is apparent from e.g. Fig. 2 - 9, the guiding device 12 may be particularly, configured to guide a first build material application element 8a in the first motion path MP1 and to guide a second build material application element 8b in the second motion path MP2. In this exemplary configuration, the guiding device 12 may comprise a first guiding element 12a, particularly a guiding rail or slide, being couplable or coupled with the first build material application element 8a, whereby the first guiding element 12a extends parallel to the first motion path MP1, particularly in between the at least two build planes BP1, BP2, and a second guiding element 12b, particularly a guiding rail or slide, being couplable or coupled with the second build material application element 8b, whereby the a second guiding element 12b extends parallel to the second motion path MP2, particularly in between the at least two build planes BP1, BP2.

As is apparent from the exemplary embodiments of e.g. Fig. 2 - 5, a respective guiding element 12a, 12b may at least partly extend in between the at least two build planes BP1, BP2. In other words, a respective guiding element 12a, 12b may extend through a clearance or gap space between the at least two build planes BP1, BP2. Thereby, the respective guiding element 12a, 12b may particularly at least partly extend parallel to parallel (inner) sides of the at least two build planes BP1, BP2 being disposed in a parallel arrangement. In this configuration of a respective guiding element 12a, 12b, the guiding element 12a, 12b may comprise at least a first portion, particularly parallely, extending along a first side of the first build plane BP1 and a first side of the second build plane BP2, the first side of the first build plane BP1 and the first side of the second build plane BP2 facing each other.

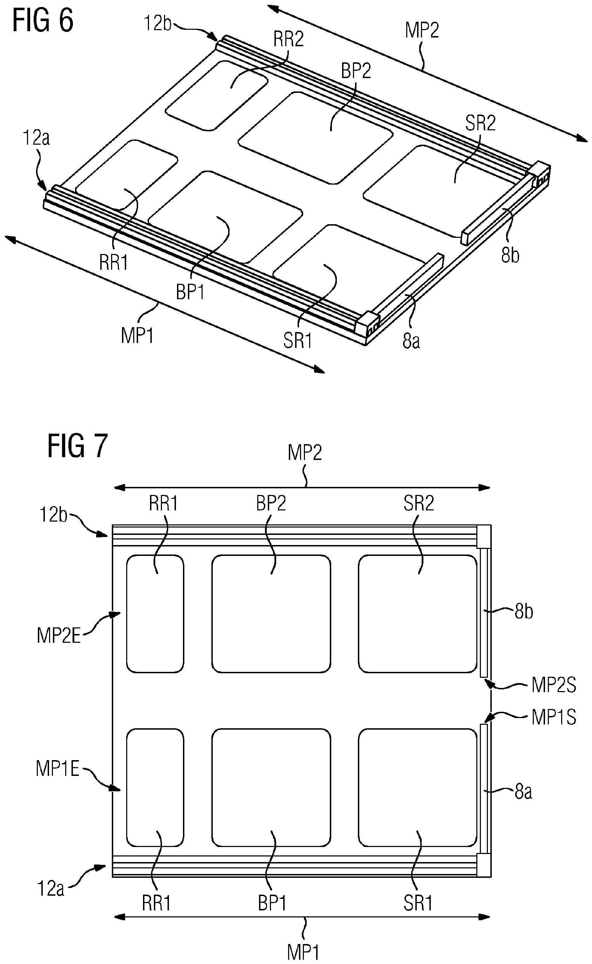

According to another exemplary configuration of the guiding element 12a, 12b (partly indicated in e.g. Fig. 6 - 9), the guiding element 12a, 12b may at least partly extend around the at least two build planes BP1, BP2 so as to encompass or surround the at least two build planes BP2. In other words, a respective guiding element 12a, 12b does not extend through a clearance or gap space between the at least two build planes BP1, BP2 in this configuration. Yet, the respective guiding element 12a, 12b may particularly at least partly extend parallel to parallel (outer) sides of the at least two build planes BP1, BP2 being disposed in a parallel arrangement. In this configuration, the guiding element 12a, 12b may comprise a first portion or segment, particularly parallely, extending along a first side of the first build plane BP1, a second portion or segment disposed between the first portion or segment and a third portion or segment of the guiding element 12a, 12b, the second portion or segment extending angled, particularly perpendicularly, relative to the first portion or segment, a third portion or segment disposed between the second portion or segment and a fourth portion or segment of the guiding element 12a, 12b, the third portion or segment, particularly parallely, extending along a first outer side of the second build plane BP2, and a fourth portion or segment disposed between the third portion or segment and the first portion or segment of the guiding element, the fourth portion or segment extending angled, particularly perpendicularly, relative to the third portion or segment.

A respective build material application element 8a, 8b can thus, also be moveably supported in a third motion path in which the build material application element 8a, 8b is moved from a position in the first motion path MP1, particularly an end position MP1E of the first motion path MP1, to a position in the second motion path MP2, particularly a start position MP2S of the second motion path MP2. The third motion path may extend transverse to the first and/or second motion path(s) MP1, MP2. Further, the build material application element 8a, 8b can thus, also be moveably supported in a fourth motion path in which the build material application element 8a, 8b is moved from a position in the second motion path MP2, particularly an end position of the second motion path MP2, to a position in the first motion path MP1, particularly a start position of the first motion path MP1. The fourth motion path may extend transverse to the first and/or second motion path(s) MP1, MP2. The first and third portion can at least partly extend in parallel. Likewise, the second and fourth portion can at least partly extend in parallel.

Deflection elements, particularly deflection rollers, can be disposed in between the first and second portion, the second and third portion, the third and fourth portion, as well as the fourth and first portion of the at least one guiding element 12a, 12b. Deflection elements can thus, be disposed in between respective motion paths. The deflection elements are adapted to transfer the at least one build material application element from one portion of the guiding element to a subsequent portion of the guiding element 12a, 12b and thus, adapted to deflect the direction of motion of the build material application element 8a, 8b from a first direction of motion into further direction of motion.

The apparatus 1 may further comprise at least one drive device (not shown) adapted to generate a drive force for moving a build material application element 8a, 8b in the first and in the second motion path MP1, MP2 or a drive device adapted to generate a drive force for moving a first build material application element 8a in the first motion path MP1 and to generate a drive force for moving at least one second build material application element 8b in the second motion path MP2. The drive device may be built as or comprise at least one drive unit, e.g. a linear drive unit, in particular a linear motor, adapted to generate a respective drive force which acts on the build material application element 8a, 8b so as to move a respective build material application element 8a, 8b in the respective motion path(s) MP1, MP2. A respective drive element may be disposed at or in a (bottom) wall element of the process chamber 7 of the apparatus 1.

A respective drive device may thus, be adapted to generate a drive force for moving a build material application element 8a. 8b in the first and in the second motion path MP1, MP2, whereby the drive device comprises at least one drive element, particularly a drive belt, being couplable or coupled with the build material application element 8a, 8b, whereby the at least one drive element extends in between the at least two build planes BP1, BP2.

Likewise, a respective drive device may be adapted to generate a drive force for moving a first build material application element 8a in the first motion path MP1 and to generate a drive force for moving a second build material application element 8b in the second motion path MP2, whereby the drive device comprises a first drive element, particularly a drive belt, being couplable or coupled with a first build material application element 8a, whereby the first drive element extends parallel to the first motion path MP1, particularly in between the at least two build planes BP1, BP2, and a second drive element, particularly a drive belt, being couplable or coupled with a second build material application element 8b, whereby the second drive element extends parallel to the second motion path MP2, particularly in between the at least two build planes BP1, BP2.

At least one motion and/or position determination device (not shown), e.g. a motion and/or position encoder, can be associated with a build material application element 8a, 8b so as to qualitatively and/or quantitatively determine a (current) motion and/or position of the respective build material application element 8a, 8b.

As is apparent from above, a respective drive element may at least partly extend in between the at least two build planes BP1, BP2, the build planes BP1, BP2 particularly being disposed in a parallel arrangement. In other words, a respective drive element may extend through a clearance or gap space between the at least two build planes BP1, BP2. Thereby, the respective drive element may particularly at least partly extend parallel to parallel (inner) sides of the build planes BP1, BP2 being disposed in a parallel arrangement. In this configuration of a respective drive element, the drive element may comprise at least a first portion, particularly parallely, extending along a first side of the first build plane BP1 and a first side of the second build plane BP2, the first side of the first build plane BP1 and the first side of the second build plane BP2 facing each other.

According to another exemplary configuration of the at least one drive element, the at least one drive element may at least partly extend around the at least two build planes BP1, BP2 so as to encompass and/or surround the at least two build planes BP1, BP2. In other words, a respective drive element does not extend through a clearance or gap space between the at least two build planes BP1, BP2 in this configuration. Yet, the respective drive element may particularly at least partly extend parallel to parallel (outer) sides of the at least two build planes BP1, BP2 being disposed in a parallel arrangement. In this configuration, the at least one drive element may comprise a first portion or segment, particularly parallely, extending along a first side of the first build plane BP1, a second portion or segment disposed between the first portion or segment and a third portion or segment of the drive element, the second portion or segment extending angled, particularly perpendicularly, relative to the first portion or segment, a third portion or segment disposed between the second portion or segment and a fourth portion or segment of the drive element, the third portion or segment, particularly parallely, extending along a first outer side of the second build plane BP2, and a fourth portion or segment disposed between the third portion or segment and the first portion or segment of the drive element, the fourth portion or segment extending angled, particularly perpendicularly, relative to the third portion or segment.

For a lateral arrangement of the at least two build planes BP1, BP2, the at least one drive element may comprise four portions, whereby a first portion, particularly parallely, extending along a first outer side of the first build plane BP1 or the second build plane, a second portion disposed between the first portion and a third portion, the second portion extending angled, particularly perpendicularly, relative to the first portion, a third portion disposed between the second portion and a fourth portion, the third portion, particularly parallely, extending along a first outer side of the second build plane BP2, and a fourth portion disposed between the third portion and the first portion of the drive element, the fourth portion extending angled, particularly perpendicularly, relative to the third portion.

For a line arrangement of the at least two build planes BP1, BP2, the at least one drive element drive element may comprise four portions, whereby a first portion, particularly parallely, extends along a first outer side of the first build plane BP1 and a first outer side of the second build plane, a second portion disposed between the first portion and a third portion, the second portion extending angled, particularly perpendicularly, relative to the first portion, a third portion disposed between the second portion and a fourth portion, the third portion, particularly parallely, extending along a second outer side of the first build plane BP1 and a second outer side of the second build plane BP2, and a fourth portion disposed between the third portion and the first portion of the drive element, the fourth portion extending angled, particularly perpendicularly, relative to the third portion.

As mentioned above, the build material application device 8 may comprise a hard- and/or software embodied control unit which is adapted to control motions of the build material application element(s) 8a, 8b at least in the first and/or second motion path MP1, MP2. The control unit may communicate with a respective drive unit adapted to generate a respective drive force which acts on the build material application element 8a, 8b so as to move the build material application element 8a, 8b in the respective motion paths MP1 MP2.

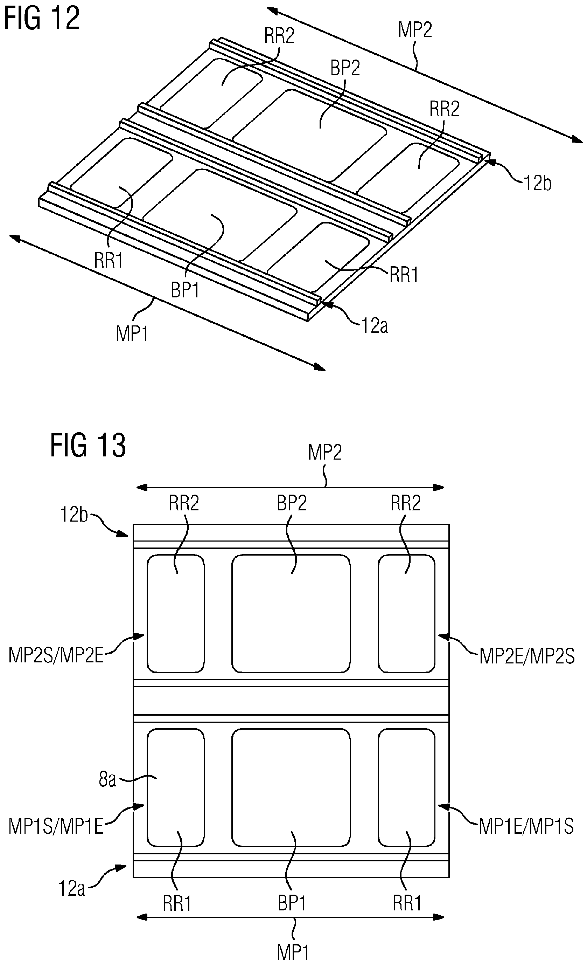

The exemplary embodiments of Fig. 10- 13, whereby Fig. 12 and 13 omit depicting the build material application elements 8a, 8b, further show that there may be two build material receiving regions RR1, RR2 associated with each of the first and the second build plane BP1, BP2. AS such, the respective start and end positions MP1S, MP1E and MP2S, MP2E of the first and second motion paths MP1, MP2 may coincide. In other words, the start position MP1S of the first motion path MP1 may also serve as an end position MP1E of the first motion path MP1 and vice versa. The same applies to the second motion path MP2.

A similar configuration is depicted in the exemplary embodiment of Fig. 15 in context with a line arrangement of the build planes BP1, BP2.

The build material application device 8 of the exemplary embodiments further allows for implementing a method for applying an amount of build material 3 in at least two build planes BP1, BP2 of an apparatus 1 for additively manufacturing three-dimensional objects 2 by means of successive layerwise selective irradiation and consolidation of layers of build material 3.

The method comprises the steps of:
- moving at least one build material application element 8a. 8b in a first motion path MP1 in which the build material application element 8a is moved across a first build plane BP1, and
- moving the at least one build material application element 8a in a second motion path MP2 in which the build material application element 8a is moved across a second build plane BP2, or
- moving at least one first build material application element 8a in a first motion path MP1 in which the build material application element 8a is moved across a first build plane BP1, and moving at least one second build material application element 8b in a second motion path MP2 in which the build material application element 8b is moved across a second build plane BP2.

## Claims

1. Apparatus (1) for additively manufacturing three-dimensional objects (2) by means of successive layerwise selective irradiation and consolidation of layers of build material (3), comprising:
- at least two build planes (BP1, BP2);
- a build material application device (8) being adapted to apply an amount of build material (3) in the at least two build planes (BP1, BP2), the build material application device (8) comprising:
-- at least one build material application element (8a, 8b), the at least one build material application element (8a, 8b) being moveably supported in a first motion path (MP1) in which the at least one build material application element (8a, 8b) is moveable or moved across a first build plane (BP1) of the at least two build planes (8a, 8b), and in a second motion path (MP1) in which the at least one build material application element (8a, 8b) is moveable or moved across a second build plane (BP2) of the at least two build planes (8a, 8b).

2. Apparatus according to Claim 1, **wherein** the build material application device (8) comprises only one build material application element (8a), the only one build material application element (8a) being moveably supported in the first motion path (MP1) and in the second motion path (MP2), or
the build material application device (8) comprises at least two build material application elements (8a, 8b), whereby a first build material application element (8a) is moveably supported in the first motion path (MP1) and at least one second build material application element (8b) is moveably supported in the second motion path (MP2).

3. Apparatus according to Clam 1 or 2, **wherein** the at least two build planes (BP1, BP2) are disposed in a lateral arrangement, particularly in a side-by-side arrangement, more particularly in a parallel arrangement, whereby the first motion path (MP1) is disposed with a lateral offset relative to the second motion path (MP2).

4. Apparatus according to any of the preceding Claims, **wherein** the at least two build planes (BP1, BP2) are disposed in a line arrangement, whereby the first motion path (BP1) is not disposed with a lateral offset relative to the second motion path (BP2).

5. Apparatus according to any of the preceding Claims, **wherein** the at least one build material application element (8a) is moveably, particularly pivotably, supported in a first spatial orientation, particularly defined by the direction the free end of the build material application element (8a) is directed to, in which it is oriented so as to be moveable in the first motion path (MP1) in which the build material application element (8a) is moveable or moved across the first build plane (BP1) of the at least two build planes (BP1, BP2), and
in a second spatial orientation, particularly defined by the direction the free end of the build material application element (8a) is directed to, in which it is oriented so as to be moveable in the second motion path (MP2) in which the build material application element (8a) is moveable or moved across the second build plane (BP2) of the at least two build planes (BP1, BP2).

6. Apparatus according to any of the preceding Claims, **further comprising** a guiding device (12) adapted to guide a build material application element (8a, 8b) in the first and in the second motion path (MP1, MP2), or
a guiding device (12) adapted to guide at least one first build material application element (8a) in the first motion path (MP1) and to guide at least one second build material application element (8b) in the second motion path (MP2).

7. Apparatus according to Claim 6, **wherein** the guiding device (12) is adapted to guide a build material application element (8a, 8b) in the first and in the second motion path (MP1, MP2), whereby the guiding device (12) comprises at least one guiding element (12a, 12b), particularly a guiding rail or slide, being couplable or coupled with the build material application element (8a, 8b), whereby the at least one guiding element extends in between the at least two build planes (BP1, BP2).

8. Apparatus according to Claim 6 or 7, **wherein** the guiding device (12) is adapted to guide at least one first build material application element (8a) in the first motion path (MP1) and to guide at least one second build material application element (8b) in the second motion path (MP2), whereby the guiding device (12) comprises
at least one first guiding element (12a), particularly a guiding rail or slide, being couplable or coupled with the at least one first build material application element (8a), whereby the at least one first guiding element (12a) extends parallel to the first motion path (MP1), particularly in between the at least two build planes (BP1, BP2), and
at least one second guiding element (12b), particularly a guiding rail or slide, being couplable or coupled with at least one the second build material application element (8b), whereby the at least one second guiding element (8b) extends parallel to the second motion path (MP2), particularly in between the at least two build planes (BP1, BP2).

9. Apparatus according to any of Claims 6 to 8, **wherein** the guiding device (12) comprises at least one guiding element (12a, 12b), particularly a guiding rail or slide, being couplable or coupled with the at least one build material application element (8a, 8b), the at least one guiding element (12a, 12b) at least partly extending around the at least two build planes (BP1, BP2) so as to encompass or surround the at least two build planes (BP1, BP2).

10. Apparatus according to any of the preceding Claims, **further comprising** a drive device adapted to generate a drive force for moving a build material application element (8a) in the first and in the second motion path (MP1, MP2), or
a drive device adapted to generate a drive force for moving at least one first build material application element (8a) in the first motion path (MP1) and to generate a drive force for moving at least one second build material application element (8b) in the second motion path (MP2).

11. Apparatus according to Claim 10, **wherein** the drive device is adapted to generate a drive force for moving a build material application element (8a) in the first and in the second motion path (MP1, MP2), whereby the drive device comprises at least one drive element, particularly a drive belt, being couplable or coupled with the build material application element (8a), whereby the at least one drive element extends in between the at least two build planes (BP1, BP2).

12. Apparatus according to any of Claims 9 to 11, **wherein** the drive device comprises at least one drive element, particularly a drive belt, being couplable or coupled with the at least one build material application element (8a, 8b), the at least one drive element at least partly extending around the at least two build planes (BP1, BP2) so as to encompass or surround the at least two build planes (BP1, BP2).

13. Build material application device for an apparatus (1) for additively manufacturing three-dimensional objects (2) by means of successive layerwise selective irradiation and consolidation of layers of build material, particularly an apparatus (1) according to any of the preceding Claims, the build material application device being adapted to apply an amount of build material in at least two build planes of a respective apparatus, the build material application device comprising at least one build material application element, the build material application element being moveably supported in a first motion path in which the build material application element is moveable or moved across a first build plane of the at least two build planes, and in a second motion path in which the build material application element is moveable or moved across a second build plane of the at least two build planes.

14. Method for applying an amount of build material (3) in at least two build planes (BP1, BP2) of an apparatus (1) for additively manufacturing three-dimensional objects (2) by means of successive layerwise selective irradiation and consolidation of layers of build material (3), particularly an apparatus (1) according to any of Claims 1 -12, the method comprising the steps of:
- moving at least one build material application element in a first motion path (MP1) in which the build material application element is moved across a first build plane (BP1), and - moving the at least one build material application element in a second motion path (MP2) in which the build material application element is moved across a second build plane (BP2), or
- moving at least one first build material application element in a first motion path (MP1) in which the build material application element is moved across a first build plane (BP1), and moving at least one second build material application element in a second motion path (MP2) in which the build material application element is moved across a second build plane (BP2).
